Europäisches Patentamt

European Patent Office

Office européen des brevets

(19)

(11) Numéro de publication: **0 085 426**

**A1**

(12)

# DEMANDE DE BREVET EUROPEEN

(21) Numéro de dépôt: 83100902.2

(22) Date de dépôt: 01.02.83

(51) Int. Cl.³: **A 23 N 12/06**
A 23 N 17/00, A 23 P 1/00
A 23 C 3/00, A 23 B 7/02
A 23 K 1/00

(30) Priorité: 02.02.82 PC T/FR82/00020

(43) Date de publication de la demande:
10.08.83 Bulletin 83/32

(84) Etats contractants désignés:
AT BE CH DE FR GB IT LI LU NL SE

(71) Demandeur: Rouas, Christian
Vallon de Trumian
F-83136 Sainte Anastasie(FR)

(72) Inventeur: Rouas, Christian
Vallon de Trumian
F-83136 Sainte Anastasie(FR)

(74) Mandataire: Casalonga, Axel et al,
BUREAU D.A. CASALONGA OFFICE JOSSE & PETIT
Baaderstrasse 12-14
D-8000 München 5(DE)

(54) Procédé de fabrication semi-continue de compositions alimentaires et installation pour la mise en oeuvre de ce procédé.

(57) Procédé de fabrication semi-continue de compositions alimentaires sous forme de crèmes concentrées de matières premières végétales et/ou animales en mélange avec une phase liquide huileuse et/ou aqueuse, dans lequel on procède tout d'abord au lavage et à l'essorage de chaque chargement des matières premières, caractérisé par le fait que l'on effectue ensuite successivement sur lesdites matières premières, un séchage à l'air chaud, un hachage fin et un malaxage à chaud desdites matières premières avec la phase liquide préchauffée, lesdites matières premières étant maintenues sous vide partiel pendant toutes ces opérations ainsi que pendant leur transfert entre les différentes opérations; et que les essences et arômes volatils s'échappant desdites matières premières au cours du séchage et du malaxage sont récupérées par distillation et réincorporées au mélange au cours de l'opération de malaxage du chargement suivant.

FIG.1

EP 0 085 426 A1

Procédé de fabrication semi-continue de compositions alimentaires et installation pour la mise en oeuvre de ce procédé.

La présente invention a pour objet un procédé de fabrication semi-continue de compositions alimentaires se présentant sous forme de crèmes concentrées à base de matières premières végétales et/ou animales. La présente invention permet notamment la fabrication de potages qui peuvent contenir une grande variété de produits végétaux tels que pommes de terre, poireaux, carottes, céleris, oignons artichauds, asperges, fenouilles, champignons, etc... ainsi que des matières aromatiques comme par exemple le basilic, le cerfeuil, la ciboulette, le cresson, l'échalotte, l'estragon, la menthe, l'oseille, la sauge, le persil, etc.... Ces potages peuvent également inclure des matières protéiniques et en particulier des volailles, des poissons, des crustacés, etc.... L'invention permet également la fabrication de concentrés de telles matières végétales ou animales tels que par exemple concentré de tomate, etc... ainsi que la fabrication de confitures à base de fruits tels que fraise, et pomme, pêche et cassis, framboise et poire, baies rouges, etc...

On connaît, par exemple par la demande de brevet allemand 2.125.930, un procédé de fabrication de crèmes de légumes concentrés qui prévoit l'addition d'une quantité importante de sel en vue de favoriser la conservation. On connaît également par le brevet britannique 1.025.824 un procédé de déshydratation des substances animales ou végétales basé essentiellement sur l'addition d'amidon suivi du séchage de la pâte obtenue. Tous ces procédés connus entraînent donc une dégradation importante de la qualité des produits obtenus en raison notamment de l'adjonction de composants de conservation.

La présente invention a pour objet un procédé de fabrication de telles compositions alimentaires se présentant sous forme de crèmes concentrée qui permet, tout en assurant la stérilisation et la conservation du produit obtenu, d'améliorer dans des proportions très sensibles les qualités gustatives et organoleptiques des compositions fabriquées. On a en effet constaté que dans les procédés classiques, qu'ils opèrent par déshydratation ou par tout autre procédé nécessitant un traitement thermique, provoquent une diminution des qualités gustatives des produits obtenus en raison d'une perte sensible des principaux arômes et essences volatils initialement contenus dans les matières premières. Cette difficulté est d'autant plus sensible que les matières premières contiennent plus de matières végétales de faible densité.

Le procédé de fabrication semi-continue de compositions alimentaires sous forme de crèmes concentrées de matières premières végétales et/ou animales selon l'invention prévoit d'effectuer un mélange desdites matières à chaud avec une phase liquide huileuse et/ou aqueuse et de récupérer les essences et arômes volatils. Selon l'invention, on effectue tout d'abord un lavage et un essorage préalables de chaque chargement de matières premières. On effectue ensuite sur lesdites matières premières un séchage à l'air chaud, un hachage fin et un malaxage à chaud avec la phase liquide préchauffée, lesdites matières premières étant maintenues sous vide partiel pendant toutes ces opérations ainsi que pendant leur transfert entre les différentes opérations. Les essences et arômes volatils s'échappant desdites matières au cours du séchage et du malaxage sont récupérées par distillation et condensation et réincorporées au mélange au cours de l'opération de malaxage du chargement suivant après avoir été ainsi rendus liposolubles hydrodispersibles sans alcool. De cette manière, les essences et arômes volatils récupérés peuvent être dosés à volonté et réincorporés dans la dernière étape du procédé de l'invention ce qui permet d'obtenir un produit dont les qualités gustatives et organoleptiques sont grandement améliorées.

Le vide partiel maintenu pendant les principales opérations du procédé de l'invention est de l'ordre de 350 à 60 torrs et de préférence de 200 à 100 torrs. La température de la phase liquide préchauffée introduite lors de l'opération de malaxage est comprise entre 50°C et 120°C selon sa nature, l'opération de malaxage elle-même étant effectuée à une température comprise entre 60 et 120°C. Plus précisément la température de la phase liquide préchauffée est d'environ 120°C pour les huiles, margarines et graisses. Elle est comprise entre 95°C et 110°C pour les mélanges d'eau et de corps gras, les mélanges de jus de légumes tels que tomates et de corps gras. Elle est comprise entre 50°C et 80°C pour les sirops de sucres tels que glucose, fructose...

L'opération de malaxage est de préférence effectuée en deux phases. Au cours de la première phase on effectue un premier brassage pendant une durée comprise entre 40 et 60 secondes puis le vide est poussé jusqu'à une valeur de 100 à 60 torrs et l'on poursuit enfin le brassage pendant une durée comprise entre 3 et 25 minutes.

L'invention a également pour objet une installation permettant la mise en oeuvre du procédé de fabrication selon l'invention. L'installation comprend un séchoir, un hachoir, un malaxeur, des moyens de transfert de la matière à traiter depuis le séchoir jusqu'au hachoir et au malaxeur. L'installation comprend également des premiers moyens pour faire le vide dans le séchoir et le malaxeur lesquels sont connectés à des moyens de distillation et de récupération par condensation des essences et arômes volatils. L'invention comprend enfin des deuxième moyens pour faire le vide dans le hachoir et évacuer l'air ambiant à l'extérieur. Ces deuxième moyens peuvent également être reliés au tunnel de transfert de la matière à traiter depuis le séchoir jusqu'au hachoir et au malaxeur.

Le séchoir utilisé comprend de préférence une cuve en acier inoxydable pouvant être hermétiquement obturée, munie d'une trémie d'introduction de matière disposée à la partie supérieure de la cuve et d'un orifice de sortie disposé à la partie inférieure de la cuve à l'opposé de la trémie. La cuve est reliée par un conduit de vide traversant un condenseur à une pompe à vide. Un premier ventilateur de soufflage d'air est disposé à la partie supérieure de la cuve tandis que la partie inférieure de la cuve est équipée d'un deuxième ventilateur de soufflage. A l'intérieur de la cuve se trouvent disposés des moyens mobiles d'extraction de la matière séchée. Par ailleurs, la cuve comporte au moins un capteur permettant de détecter le volume de la matière contenue dans le séchoir. De cette manière, il est possible d'effectuer de manière automatique un cycle de séchage comportant le remplissage du séchoir par la trémie supérieure, la détection d'un niveau convenable du volume de matière à sécher, le séchage avec création d'une turbulence importante à l'intérieur de la cuve grâce à l'existence des deux ventilateurs de soufflage et enfin après que le séchage soit effectué, l'extraction de la matière séchée par l'orifice de sortie. La matière est ensuite reprise, par exemple par un tapis transporteur disposé à l'intérieur d'un tunnel relié à une deuxième pompe à vide et conduisant ladite matière jusqu'à un hachoir.

Le hachoir est de préférence monté au voisinage de l'orifice d'entrée du malaxeur et il comprend une pluralité de lames pouvant être animées d'un mouvement vertical de va-et-vient. Un organe poussoir est capable, après hachage, d'introduire la matière hachée dans le malaxeur.

Le malaxeur est muni d'un dispositif agitateur monté rotatif sur un arbre creux central. Une paroi chauffante calorifugée est capable de maintenir l'enceinte du malaxeur à une température élevée comprise entre 60°C et 120°C. L'enceinte interne du malaxeur est en outre reliée à une conduite de vide connectée par l'intermédiaire d'un condenseur à la pompe à vide qui réalise le vide partiel également à l'intérieur du séchoir. Un tube d'introduction d'essences et/ou d'arômes distillées récupérés et rendus liposolubles est monté à l'intérieur de l'arbre creux du malaxeur. Dans un mode de réalisation avantageux, le tube d'introduction peut coopérer avec un piston d'éjection capable de provoquer l'éjection des distillats liquides par des orifices du tube d'introduction et de l'arbre creux jusqu'à l'intérieur du malaxeur.

Il est ainsi possible d'effectuer la réintroduction des essences et/ou arômes distillés et rendus liposolubles et hydrodispersibles sans alcool. Cette introduction peut être convenablement dosée par exemple au moyen de deux réceptacles doseurs recevant respectivement les essences et les arômes distillés et condensés.

L'installation selon l'invention sera mieux comprise à l'étude de la description détaillée d'un mode de réalisation pris à titre d'exemple nullement limitatif et illustré par les dessins annexés, sur lesquels :

la fig. 1 est une vue schématique des éléments essentiels d'une installation permettant la mise en oeuvre du procédé de l'invention;

la fig. 2 est une vue en coupe en élévation d'un séchoir pouvant être utilisé dans une installation selon l'invention;

la fig. 3 est une vue de dessus du séchoir de la fig. 2;

la fig. 4 illustre un cycle de fonctionnement automatique de séchage;

la fig. 5 est une vue en coupe schématique d'un malaxeur pouvant être utilisé dans une installation selon l'invention; et

la fig. 6 est une vue agrandie en coupe des moyens d'introduction des distillats récupérés, dans l'enceinte du malaxeur.

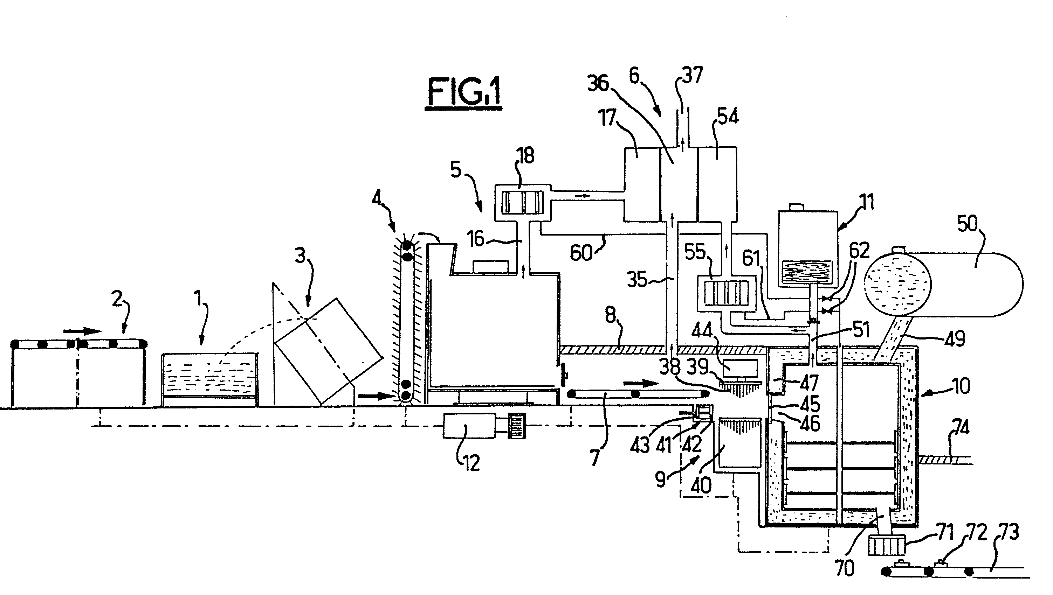

Telle qu'elle est illustrée schématiquement sur la fig. 1, l'installation comprend une première étape de lavage et d'essorage mettant en oeuvre une cuve de trempage à l'eau claire 1 permettant d'éliminer les impuretés et comportant un panier interne perforé non illustré sur la figure. Il est possible d'améliorer cette étape de lavage en introduisant dans la cuve de l'air comprimé sous une pression de l'ordre de 10 bars dans le milieu et dans le bas de la cuve ainsi que sur les côtés de façon à effectuer un brassage de la matière première qui est alimentée automatiquement par le tapis roulant 2 à fonctionnement intermittent. Après un certain temps de lavage dans la cuve 1, son contenu est déversé dans l'essoreuse 3 dont le tambour peut être incliné comme illustré sur la fig. 1 pour faciliter la récupération à la partie basse après essorage. La matière première essorée est reprise par un élévateur 4 qui la déverse dans un séchoir 5 maintenu sous vide partiel par des moyens pour faire le vide référencés 6 d'une manière générale. Après le séchage à l'air chaud, la matière est déplacée par le tapis roulant 7 à l'intérieur d'un tunnel hermétique 8 également relié au moyen de vide, jusqu'à un hachoir 9. Après l'opération de hachage, la matière est introduite dans un malaxeur 10 également relié au moyen de vide 6 et à l'intérieur duquel peut être introduite une phase liquide huileuse et/ou aqueuse contenue dans le réservoir 11. L'entraînelent des différents organes mobiles de l'installation est effectué par des moteurs électriques tels que le moteur 12.

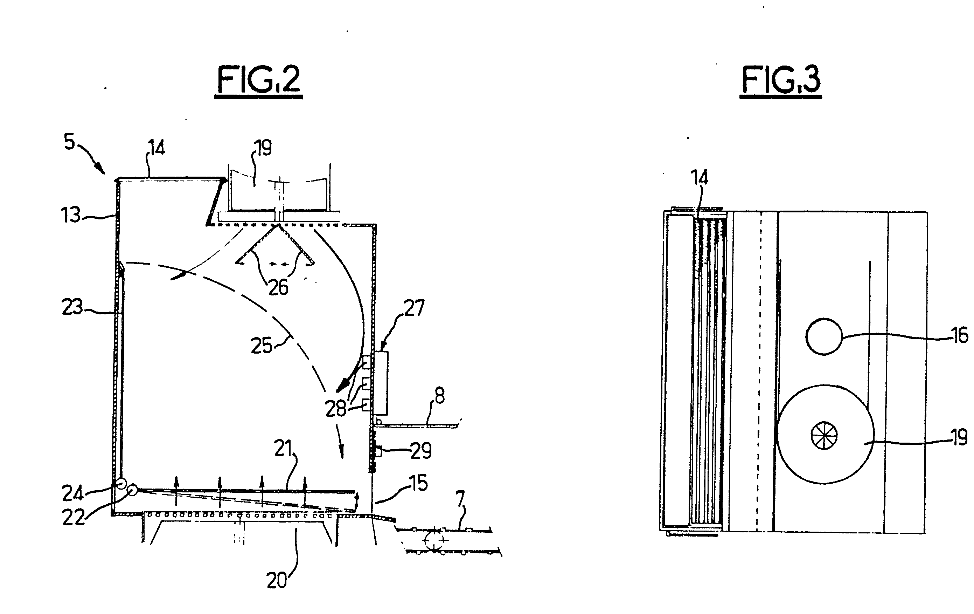

En se reportant aux fig. 2 et 3 on va maintenant décrire de manière plus précise et à titre d'exemple un séchoir qui peut être utilisé avantageusement dans l'installation selon l'invention.

Le séchoir 5 comprend une cuve 13 en acier inoxydable munie d'une trémie d'entrée 14 à sa partie supérieure et d'un orifice de sortie 15 à sa partie inférieure. On notera que la trémie 14 se trouve du côté opposé de l'orifice de sortie 15. La cuve est reliée par un conduit de vide 16 visible sur les fig. 1 et 3 à une première pompe à vide 17 par l'intermédiaire d'un condenseur 18.

Un premier ventilateur de soufflage 19 est monté sur la paroi supérieure de la cuve 13 au-dessus d'un orifice perforé de façon à engendrer dans le séchoir un flux d'air chaud dirigé de haut en bas. Un deuxième ventilateur de soufflage 20 est monté dans la paroi inférieure de la cuve 13 sous un orifice perforé de façon à diriger un flux d'air chaud de bas en haut à l'intérieur de la cuve.

Des moyens mobiles d'extraction de la matière séchée sont disposés à l'intérieur de la cuve. Ces moyens comportent une plaque de fond perforée 21 montée au-dessus du fond de la cuve 13 parallèlement à ce dernier et capable de subir un mouvement de pivotement autour de l'axe 22 entre une position normale horizontale telle qu'illustrée sur la fig. 2 et une position d'extraction illustrée en pointillé sur la fig. 2, inclinée vers l'orifice de sortie 15 de façon à obtenir une pente de l'ordre de 10 à 20°. Une deuxième plaque ou plaque d'extraction 23 également perforée est montée autour d'un axe 24 de façon à pouvoir subir un mouvement de pivotement entre une position normale verticale illustrée en trait plein sur la fig. 2 le long de la paroi latérale de la cuve 13 située à l'opposé de l'orifice de sortie 15 et une position d'extraction proche de l'horizontale, le mouvement étant schématisé par la flèche en pointillé 25 sur la fig. 2. Le mouvement des plaques 21 et 23 peut être obtenu par un vérin hydraulique commandé électriquement et non illustré sur la figure.

Dans un mode de réalisation avantageux non illustré sur la figure, il est également possible d'améliorer l'extraction en faisant vibrer la plaque de fond 21 pendant l'opération d'extraction. Dans certaines applications mettant en oeuvre des matières légères cet effet vibrant est suffisant pour l'extraction de sorte que la plaque 23 peut même être supprimée ou rendue inopérante.

A l'intérieur de la cuve 13 et dans l'axe du premier ventilateur de soufflage 19 se trouvent disposés deux volets directionnels rectangulaires 26 pouvant être orientés entre une position où ils obturent l'orifice d'introduction d'air issu du ventilateur 19 et une position où ils se trouvent plaqués l'un contre l'autre laissant un passage maximal au flux d'air. Dans les positions intermédiaires telle que celle illustrée sur la fig. 2, les deux volets sont capables de créer une forte turbulence symbolisée par les flèches en trait plein sur la fig. 2 pour l'air chaud pulsé par le ventilateur 19. Les volets 26 comportent dans ce but de préférence sur leur surface supérieure des cannelures non représentées sur la figure, de forme hélicoïdale et évasées à 20° augmentant encore cet effet de turbulence afin de favoriser le brassage en particulier des matières végétales légères (persil, menthe, cresson, etc...).

La cuve 13 comporte en outre un ensemble de capteurs 27 comportant par exemple trois cellules photo-électriques 28 placées au-dessus de l'orifice 15 dans la paroi latérale de la cuve 13. Selon la cellule 28 choisie, il est donc possible de déterminer le niveau approprié de matière végétale à sécher et de commander le déroulement du séchage.

0085426

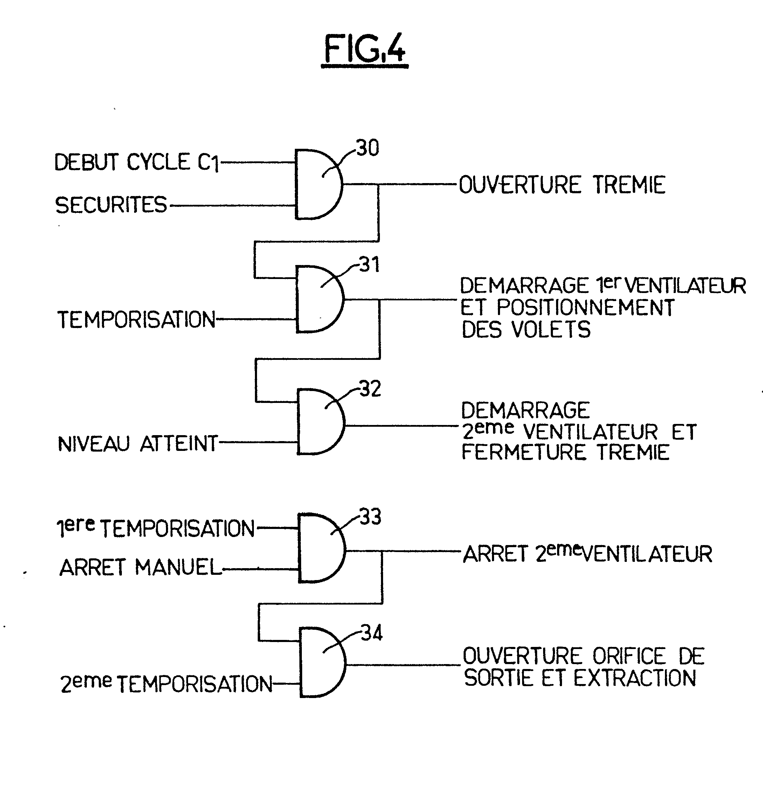

Un cycle de séchage se fait automatiquement comme on peut le voir en examinant la fig. 4. Des dispositifs de sécurité permettent de contrôler le fonctionnement de l'élévateur 4 qui approvisionne le séchoir 5 par la trémie supérieure 14 et de contrôler la condamnation magnétique du clapet 29 destiné à obturer l'orifice 15. La porte logique ET 30 recevant une information de début d'un cycle $C_1$ et des informations relatives au dispositif de sécurité entraîne une commande d'ouverture de la trémie 14 et, après une temporisation par l'intermédiaire de la porte ET 31, le démarrage du premier ventilateur 19 et le positionnement des volets 26.

Le signal émis par la cellule choisie 28 entraîne, par l'intermédiaire de la porte ET 32, la fermeture de la trémie 14 et le démarrage du deuxième ventilateur 20.

Après une deuxième temporisation ou éventuellement à la suite d'une action d'arrêt manuelle, la porte OU 33 provoque l'arrêt du deuxième ventilateur 20 le premier ventilateur 19 étant maintenu en fonctionnement avec les volets 26 en position de turbulence minimale. Cette phase du séchage correspond à la fin de l'opération de séchage et de brassage et le début de la phase d'extraction des matières séchées. Pendant la phase de séchage avec brassage, les deux ventilateurs antagonistes 19, 20 ont assuré une grande turbulence de l'air chaud pulsé maintenu à une température constante comprise entre 35°C et 50°C qui active le séchage des matières et notamment des matières légères maintenues en continuel mouvement. Une telle procédure permet de traiter un grand volume de matière à sécher en diminuant l'énergie nécessaire par unité de volume de matière séchée. Pendant les opérations de séchage l'action de la pompe à vide 17 reliée au séchoir par la conduite 16 permet d'assurer une température interne constante pour la matière première et la récupération des essences volatiles par leur passage à travers le condenseur 18. Le vide maintenu est de préférence de 350 à 200 torrs.

A la fin de la phase de séchage avec brassage et au début de la phase d'extraction, les volets 26 sont déplacés de façon à être plaqués l'un contre l'autre diminuant ainsi la turbulence du flux d'air introduit par le ventilateur 19 qui plaque les matières séchées contre la plaque de fond 21, résultat qui est favorisé par le fait que le ventilateur 20 est arrêté. On fait alors pivoter et éventuellement vibrer la plaque de fond 21 puis on provoque le déplacement de pivotement de la plaque 23 dont la surface ajourée permet de favoriser l'action de plaquage des matières séchées par le flux d'air provenant du ventilateur 19.

Après une deuxième temporisation correspondant au temps nécessaire à ce déplacement des moyens d'extraction 21, 23, la porte ET logique 34 émet un signal d'ouverture du clapet 29 de l'orifice de sortie 15. La matière séchée extraite du séchoir est reprise par le tapis roulant 7 visible sur la fig. 1 et disposé à l'intérieur du tunnel hermétique 8.

On notera que le choix de la cellule 28 permettant la détermination du niveau de volume utile de séchage se fait en fonction de la matière première utilisée. Il en est de même du choix des durées de temporisation et de séchage.

Le tunnel 8 est fixé hermétiquement à la paroi de la cuve du séchoir 5 et à celle du malaxeur 10. L'air se trouvant dans le tunnel est évacué par la canalisation 35 reliée à une pompe à vide secondaire 36 dont l'échappement se fait à l'air libre par la canalisation 37. La pression régnant dans le tunnel 8 est maintenue de 350 à 200 torrs. La matière première issue du séchoir ne subit donc lors de son déplacement dans le tunnel 8 aucune oxydation ni d'effet de rancissement.

L'extrémité du tapis transporteur 7 déverse la matière transportée dans la zone du hachoir 9. Le hachoir 9 est équipé d'une pluralité de lames 38 montées sur une platine mobile 39 qui peut être animée d'un mouvement vertical de va-et-vient, les lames 38 pénétrant dans des fentes adaptées pratiquées dans un socle 40 convenablement renforcé. Un organe poussoir 41 comporte deux lames transversales 42, 43 et peut être déplacé par des moyens non représentés au-dessus du socle 40 dans la zone du hachoir 9 en étant guidé latéralement dans des glissières non représentées dudit hachoir 9.

L'opération de hachage est commandée automatiquement lorsque le chargement provenant du séchoir a été entièrement déversé dans la zone du hachoir 9. Le mécanisme d'actionnement 44 provoque le mouvement alternatif de va-et-vient vertical des lames 38, l'organe poussoir 41 étant maintenu en retrait comme illustré sur la fig. 1. A la fin de l'opération de hachage, les lames 38 étant remontées, l'organe poussoir 41 est déplacé de la gauche vers la droite sur la fig. 1 après que le clapet 45 qui obture l'orifice d'entrée 46 du malaxeur 10 ait été ouvert. On notera que l'écartement des lames 42, 43 de l'organe pousseur 41 correspond à l'épaisseur totale de la double paroi calorifugée 47 à circulation de vapeur du malaxeur 10. Pendant les opérations

9

0085426

de transport de la matière séchée et pendant le hachage, la pression dans le tunnel 8 est maintenue de 350 à 200 torrs.

La matière finement hachée est ensuite introduite dans la cuve du malaxeur 10 jusqu'à ce qu'elle en remplisse environ le tiers du volume total.

On notera que selon la composition fabriquée, le hachage peut être une opération facultative. On peut par exemple incorporer à partir du séchoir soit des fruits entiers (fraises, framboises, cassis, cerises dénoyautées, etc...) soit des matières déjà hachées (légumes ou viandes préalablement découpés, poissons émincés, etc...). De telles matières se trouvant déjà en petits morceaux sont simplement déplacées sur le tapis transporteur 7 depuis le séchoir jusqu'au malaxeur, les lames 38 du hachoir étant alors retenues en position haute. Bien entendu, l'action de la pompe à vide 37 est cependant maintenue de façon à protéger les matières transportées contre toute oxydation ou rancissement pendant leur transport.

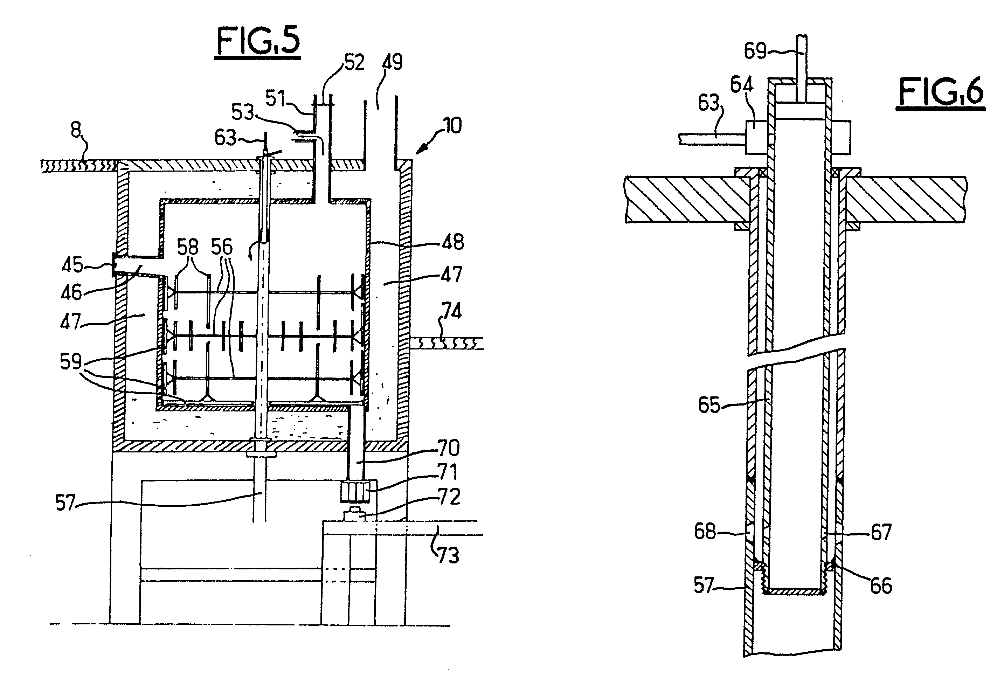

On se reportera à la fig. 5 qui illustre de manière plus détaillée à titre d'exemple la structure interne d'un malaxeur qui peut être utilisé dans l'invention. Celui-ci comporte une enceinte interne délimitée par une cuve en acier inoxydable 48 et maintenue à une température constante entre 60°C et 120°C par la double paroi 47 chauffée à la vapeur et communiquant par la conduite de vapeur 49 avec la réserve de vapeur 50. L'enceinte 48 communique également par la conduite 51 avec le réservoir 11 contenant la phase liquide huileuse et/ou aqueuse, le passage pouvant être obturé de manière commandée par l'électrovanne 52. La conduite 51 est en outre reliée par une dérivation 53 à la pompe à vide 54 par l'intermédiaire du condenseur 55 dans lequel les arômes volatils peuvent être distillés et récupérés.

A l'intérieur de l'enceinte 48 du malaxeur 10 se trouvent trois pales 56 d'agitateur montées sur un arbre central rotatif creux 57 traversant de part en part le malaxeur 10. Les pales d'agitateur 56 présentent des lames 58 dont certaines 59 sont en contact avec les parois de la cuve 48 afin d'éviter à la composition en cours de cuisson de coller aux parois de la cuve 48.

Les essences et arômes distillés dans les condenseurs respectifs 18 et 55 parviennent par les conduites 60 et 61 par l'intermédiaire de deux vannes 62 à une canalisation 63 visible en particulier sur la fig. 6 et qui permet la réintroduction dosée des distillats dans l'enceinte du malaxeur. Dans ce but, la canalisation 63 est reliée à un joint tournant 64 monté sur un tube 65 dont la partie basse est vissée sur une plaque 66 solidaire de la paroi interne de l'arbre creux 57. Le tube d'introduction 65 est muni au voisinage de sa partie basse d'orifices ou gicleurs 67 correspondant à des orifices ou gicleurs 68 pratiqués dans la paroi de l'arbre creux 57. Un piston 69 peut être commandé de façon à provoquer l'éjection du liquide se trouvant dans le tube d'introduction 65 jusque dans la cuve du malaxeur 10 par l'intermédiaire des orifices 67 et 68.

Dans ces conditions, les essences et arômes distillés qui peuvent d'ailleurs être convenablement et indépendamment dosés par des moyens non représentés sur les figures et rendus liposolubles et hydrodispersibles sans alcool peuvent être réincorporés à l'intérieur du malaxeur 10 au cours d'une phase de malaxage. Il est possible de choisir selon le type de fabrication la proportion essences/arômes.

On notera que la réincorporation des essences et des arômes peut être faite par d'autres moyens par exemple au cours d'une phase d'arrêt de la rotation de l'arbre creux 57.

Avant le début de la phase de malaxage le liquide préchauffé dans le réservoir 11 est introduit par la canalisation 51. De préférence, le volume de liquide introduit ne dépasse pas, avec la matière hachée, les deux tiers du volume total de la cuve du malaxeur. Après fermeture des différents orifices de la cuve 48, on effectue un premier brassage lent de 4 à 6 tours de rotation pendant 40 à 60 secondes. La pression est ensuite abaissée jusqu'à une valeur de 300 à 100 torrs au moyen de la pompe à vide 54 tout en récupérant dans le condenseur 55 les arômes qui s'échappent du malaxeur à l'état gazeux.

Les matières à l'intérieur du malaxeur sont maintenues à une température élevée entre 55°C et 110°C et on effectue ensuite un brassage à une vitesse qui est de préférence de l'ordre d'une révolution toutes les 10 secondes environ pendant une durée comprise entre 3 et 25 minutes.

Le maintien de la température élevée par le circuit de vapeur à double paroi 47 est favorisé par la température élevée de l'ordre de 120°C du liquide introduit par la conduite 52 ce qui permet d'effectuer simultanément dans le malaxeur la stérilisation du mélange ainsi que sa cuisson.

Il y a lieu de noter que l'introduction des arômes et essences récupérés se fait dans la cuve du malaxeur avant l'introduction de la phase liquide jouant le rôle de jutage d'appertisation. De préférence, l'introduction des arômes et essences a lieu entre 60 et 90 secondes soit 6 à 9 rotations de l'axe du malaxeur avant le jutage d'appertisation.

Après une durée convenable dépendant de la nature des matières premières traitées, le mélange prêt à être conditionné est extrait de la cuve 48 du malaxeur 10 par la conduite 70 reliée à un dispositif doseur 71 qui délivre à des récipients 72 la composition stérilisée, les récipients pouvant être immédiatement obturés comme il est bien connu dans la technique. Les récipients 72 se déplacent sur un tapis transporteur 73 à l'intérieur d'un tunnel de protection 74 à la pression atmosphérique.

On notera que le procédé de l'invention est un procédé semi-continu opérant par une succession de cycles. Lors du séchage et de la cuisson d'un chargement de matière on récupère donc une certaine quantité d'essences et arômes volatils qui sont, après distillation et récupération réintroduits dans les mêmes proportions ou dans des proportions différentes dans le malaxeur au cours du traitement d'un chargement suivant c'est-à-dire du chargement d'un cycle de traitement suivant.

On peut procéder en fin de malaxage à l'introduction dans le tunnel 8 d'un courant de gaz tel que de l'oxyde d'éthylène injecté par la canalisation 35 et repris par l'intermédiaire de la canalisation 51 issue du malaxeur afin d'évacuer les vapeurs graisseuses résiduelles de fin de cuisson. La pression monte alors dans le tunnel 8 et le malaxeur 10 jusqu'à 100 à 200 torrs devenant ainsi identique à la pression qui règne dans le séchoir 5. Cette opération finale évite toute disparité du niveau de pression disparité qui provoquerait une légère aspiration de la matière dès sa sortie du séchoir sur le tapis roulant 7.

A titre d'exemple pour la phase liquide qui peut être utilisée au cours de la phase de malaxage on pourra citer toutes les huiles alimentaires végétales (arachide, tournesol, maïs, olive, palme, etc...) ne subissant aucune dégradation à 120°C, les graisses végétales (margarine) supportant la même température, les graisses animales, graisse d'oie, graisse de canard, etc...; des mélanges d'eau et de corps gras végétaux ou animaux, des jus de tomate additionnés de corps gras, etc... pour lesquels la température de la phase liquide dans le réservoir 11 est maintenue entre 95°C et 110°C.

Enfin, dans le but d'obtenir des confitures ou produits analogues on utilisera à titre de phase liquide des sirops de glucose, de fructose, d'érable, etc... auquel cas la température de la phase liquide se trouvant dans le réservoir 11 est maintenue entre 50 et 80°C environ.

L'invention pourra être illustrée par les exemples suivants nullement limitatifs.

## EXEMPLE 1

On introduit dans le réservoir 11 un mélange de 80% d'eau et de 20% de corps gras, soit 64 litres d'eau pure, 8 litres de graisse obtenus après cuisson à l'eau et filtration de morceaux de poulets et 8 litres d'huile d'arachide. L'ensemble est maintenu à 110°C. L'on introduit dans le séchoir 155 kg composés des matières suivantes qui ont été préalablement très finement émincées : 60 kg de poulet, 15 kg de porc maigre, 20 kg de pommes de terre, 15 kg d'oignons, 15 kg de carottes, 10 kg de céleri, 5 kg d'échalottes, 5 kg de persil, 5 kg d'ail, 5 kg de basilic. Ces matières sont déshydratées à raison de 45% par rapport à l'humidité initiale, ce après 25 à 40 minutes de séchage. Les lames du hachoir étant bloquées, le chargement restant séché (70 kg) est malaxé 6 minutes, la température de l'enceinte de cuve 48 est à 114°C, le mélange à l'intérieur à 106°C, le jutage d'appertisation à 103°C.

On obtient ainsi une crème concentrée pour potage composée des matières végétales et animales introduites dans le séchoir.

## EXEMPLE 2

On introduit dans le réservoir 11, 80% de jus frais de tomate et 20% de corps gras et on maintient le liquide à une température de 110°C, pour un litrage de 64 litres de jus frais de tomate sucré à 10 g/litre et 16 litres d'huile d'olive. L'on introduit dans le séchoir 45 kg composés des matières suivantes qui ont été préalablement très finement émincées : 20 kg de boeuf, 5 kg de porc, 15 kg d'oignons, 2 kg de carottes, 2 kg de céleri, 1 kg d'ail. Ces matières sont déshydratées à raison de 40% par rapport à l'humidité initiale, ce après 12 à 18 minutes de séchage. Les lames du hachoir étant bloquées, le chargement restant séché (18 kg) est malaxé à 4 minutes, la température de l'enceinte de la cuve 48 est à 114°C, le mélange à 106°C, le jutage d'apper-tisation à 103°C.

On obtient une sauce concentrée composée non seulement de tomates mais également des autres matières végétales et animales introduites dans le séchoir.

**0085426**

## EXEMPLE 3

On introduit dans le réservoir 11 un sirop de glucose ou de fructose que l'on maintient à une température de 60°C, pour un litrage total préchauffé de 80 litres. L'on introduit dans le séchoir 150 kg de fraises qui sont déshydratées à raison de 40% par rapport à l'humidité initiale, ce après 20 à 30 minutes de séchage. Le chargement restant séché (90 kg) est haché pendant 4 à 6 minutes, puis introduit en phase de malaxage selon le principe connu de cuisson de confiture dit "de basse température". La température de l'enceinte de la cuve 48 est progressivement élevée jusqu'à obtenir 63°C constant pendant 25 minutes de brassage tandis que la température de la crème brassée se situe à 58°C.

On obtient ainsi une crème confit concentrée composée des fruits introduits dans le séchoir.

0085426

## REVENDICATIONS

1. Procédé de fabrication semi-continue de compositions alimentaires sous forme de crèmes concentrées de matières premières végétales et/ou animales en mélange avec une phase liquide huileuse et/ou aqueuse, dans lequel on procède tout d'abord au lavage et à l'essorage de chaque chargement des matières premières, caractérisé par le fait que l'on effectue ensuite successivement sur lesdites matières premières, un séchage à l'air chaud, un hachage fin et un malaxage à chaud desdites matières premières avec la phase liquide préchauffée, lesdites matières premières étant maintenues sous vide partiel pendant toutes ces opérations ainsi que pendant leur transfert entre les différentes opérations; et que les essences et arômes volatils s'échappant desdites matières premières au cours du séchage et du malaxage sont récupérées par distillation et réincorporées au mélange au cours de l'opération de malaxage du chargement suivant.

2. Procédé selon la revendication 1, caractérisé par le fait que le vide partiel est maintenu à une valeur de 300 à 60 torrs et de préférence de 200 à 100 torrs.

3. Procédé selon les revendications 1 ou 2, caractérisé par le fait que la température de la phase liquide préchauffée est maintenue entre 50 et 120°C.

4. Procédé selon l'une quelconque des revendications précédentes, caractérisé par le fait que l'on sépare les essences et larômes issu respectivement du séchage et du malaxage et que l'on fait varier la proportion essences/ arômes réincorporés au cours de l'opération de malaxage.

5. Procédé selon l'une quelconque des revendications précédentes, caractérisé par le fait que l'opération de malaxage est effectuée à une température comprise entre 60°C et 120°C.

6. Procédé selon la revendication 5, caractérisé par le fait que l'on procède à un brassage préliminaire lent de 4 à 6 tours de rotation pendant une durée de 40 à 60 secondes puis que le vide est poussé jusqu'à 100 à 60 torrs et que l'on poursuit le brassage à raison d'une révolution en 10 secondes environ pendant une durée comprise entre 3 et 25 minutes.

7. Installation pour la mise en oeuvre du procédé de fabrication selon l'une quelconque des revendications précédentes, caractérisée par le fait qu'elle comprend un séchoir (5), un hachoir (9), un malaxeur (10), des moyens

15

0085426

de transfert (7, 8) de la matière à traiter depuis le séchoir jusqu'au hachoir et au malaxeur, des premiers moyens (17, 54) pour faire le vide dans le séchoir et le malaxeur connectés à des moyens de condensation et de récupération (18, 55) des essences et arômes volatils, et des deuxième moyens (37) pour faire le vide dans le hachoir (9) et évacuer l'air ambiant à l'extérieur.

8. Installation selon la revendication 7, caractérisée par le fait que le séchoir comprend une cuve (13) pouvant être hermétiquement obturée, munie d'une trémie d'introduction supérieure (14) et d'un orifice de sortie inférieur (15) ainsi que d'un conduit de vide (16), un premier ventilateur de soufflage d'air (19) à la partie supérieure de la cuve, un deuxième ventilateur de soufflage (20) à la partie inférieure de la cuve, des moyens mobiles d'extraction de la matière séchée (21, 23) et au moins un capteur (28) adapté à la détection du volume de matière contenue dans le séchoir.

9. Installation selon la revendication 8, caractérisée par le fait que les moyens mobiles d'extraction comprennent une plaque de fond perforée (21) montée au-dessus du fond de la cuve (13) et capable de subir un mouvement de pivotement entre une position normale horizontale et une position d'extraction inclinée vers l'orifice de sortie.

10. Installation selon la revendication 9, caractérisée par le fait que la plaque de fond perforée (21) est associée à un dispositif vibrant.

11. Installation selon les revendications 9 ou 10, caractérisée par le fait que les moyens mobiles d'extraction comprennent en outre une plaque d'extraction perforée (23) capable de subir un mouvement de pivotement entre une position normale verticale le long d'une paroi latérale de la cuve opposée à l'orifice de sortie (15) et une position d'extraction proche de l'horizontale.

12. Installation selon l'une quelconque des revendications 8 à 11, caractérisée par le fait que deux volets pivotants (26) peuvent coopérer avec le premier ventilateur (19) pour augmenter la turbulence de l'air de séchage introduit dans le séchoir.

13. Installation selon l'une quelconque des revendications 8 à 12, caractérisée par le fait que des moyens de commande sont associés au séchoir pour effectuer automatiquement un cycle de séchage comprenant :
- ouverture de la trémie d'entrée (14);

- mise en route du premier ventilateur (19) et déplacement des volets pivotants (26) en vue d'une turbulence maximale;

- fermeture de la trémie d'entrée (14) dès la détection par le capteur (28) du volume de matière désirée;

- mise en route du deuxième ventilateur (20);

- après temporisation, arrêt du deuxième ventilateur (20);

- déplacement des volets pivotants (26) en vue d'une turbulence minimale;

- ouverture de l'orifice de sortie (15);

- pivotement de la plaque de fond (21) et éventuellement de la plaque d'extraction (23);

- arrêt du premier ventilateur (19);

- fermeture de l'orifice de sortie (15);

- retour en position normale des moyens d'extraction.

14. Installation selon la revendication 7, caractérisée par le fait que le hachoir (9) est monté au voisinage d'un orifice d'entrée (46) du malaxeur à l'intérieur d'un tunnel hermétique (8) relié à une conduite d'extraction d'air (35) reliée à l'extérieur et alimentée en matière provenant du séchoir.

15. Installation selon la revendication 7, caractérisée par le fait que le malaxeur (10) comprend un dispositif agitateur monté rotatif sur un arbre creux central (57), le malaxeur étant muni d'une paroi chauffante calorifugée (47) capable de le maintenir à haute température et relié à une conduite de vide (53).

16. Installation selon la revendication 15, caractérisée par le fait qu'un tube (65) d'introduction d'essences et/ou d'arômes distillés récupérés et rendus liposolubles est monté à l'intérieur de l'arbre creux (57) du malaxeur et coopère avec un piston d'éjection (69) capable de provoquer l'éjection des distillats par des orifices (67, 68) du tube (65) et de l'arbre creux (57) jusque dans le malaxeur.

17. Installation selon la revendication 16, caractérisée par le fait que le tube d'introduction (65) peut être relié à deux réceptacles doseurs recevant respectivement les essences et les arômes distillés issus de moyens de condensation reliés respectivement aux moyens pour faire le vide dans le séchoir et dans le malaxeur.

FIG.1

## FIG.2

## FIG.3

0085426

# FIG.4

DEBUT CYCLE $C_1$ ——⊃ 30 ——— OUVERTURE TREMIE

SECURITES ———⊃

——⊃ 31 ——— DEMARRAGE 1er VENTILATEUR ET POSITIONNEMENT DES VOLETS

TEMPORISATION ———⊃

——⊃ 32 ——— DEMARRAGE 2eme VENTILATEUR ET FERMETURE TREMIE

NIVEAU ATTEINT ———⊃

1ere TEMPORISATION ——⊃ 33 ——— ARRET 2eme VENTILATEUR

ARRET MANUEL ———⊃

——⊃ 34 ——— OUVERTURE ORIFICE DE SORTIE ET EXTRACTION

2eme TEMPORISATION ———⊃

FIG.5

FIG.6

0085426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | GB-A-1 025 824 (H. GRIFFON)<br>* Page 2, lignes 57-101; page 3, ligne 83 - page 4, ligne 14 *<br>--- | 1,7 | A 23 N 12/06<br>A 23 N 17/00<br>A 23 P 1/00<br>A 23 C 3/00<br>A 23 B 7/02<br>A 23 K 1/00 |
| D,A | DE-A-2 125 930 (MEDIKEMIA SZÖVETKEZET)<br>* Page 2, paragraphe 2; page 3, paragraphe 3 - page 4, paragraphe 3 *<br>--- | 1,7 | |
| A | FR-A-1 314 092 (THE PILLSBURY COMPANY)<br>* Page 3, colonne de gauche, paragraphe 11 - page 4, colonne de gauche, paragraphe 2 *<br>--- | 1,7 | |
| A | FR-A-2 473 271 (AGROPROTEINE INDUSTRIE S.A.)<br>--- | | **DOMAINES TECHNIQUES RECHERCHES (Int. Cl. ³)** |
| A | US-A-3 785 063 (R.W. BISHOP)<br>--- | | A 23 N<br>A 23 P<br>A 23 C |
| A | US-A-3 335 015 (J.H. FORKNER)<br><br>----- | | A 23 B<br>A 23 K |

Le présent rapport de recherche a été établi pour toutes les revendications

| Lieu de la recherche | Date d'achèvement de la recherche | Examinateur |
|---|---|---|
| LA HAYE | 14-04-1983 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82